# EUROPEAN PATENT SPECIFICATION

(11) **EP 3 548 546 B1**
(45) Date of publication and mention of the grant of the patent: **02.06.2021**
(21) Application number: 17817280.5
(22) Date of filing: 29.11.2017
(51) Int. Cl.: C08J 5/18, C08L 67/04, C08L 3/02, C08L 29/04

(54) **BIAXIALLY STRETCHED STARCH-BASED FOIL**
BIAXIAL GESTRECKTE FOLIE AUF STÄRKEBASIS
FEUILLE À BASE D'AMIDON ÉTIRÉE BIAXIALEMENT

(30) Priority: 29.11.2016 NL 2017891
(43) Date of publication of application: 09.10.2019
(73) Proprietor: Stichting Kennis Exploitatie RB, 4903 RC Oosterhout (NL)
(72) Inventor: VAN SOEST, Jeroen Johannes Gerardus, 4903 RC Oosterhout (NL); RODENBURG, Thijs, 4903 RC Oosterhout (NL); RODENBURG, Joost, 4903 RC Oosterhout (NL)
(74) Representative: Nederlandsch Octrooibureau
(86) International application number: PCT/NL2017/050795
(87) International publication number: WO 2019/108056

(56) References cited:
- WO-A1-2010/133560

## Description

The invention relates to a biaxially stretched polylactide/thermoplastic starch foil, and to a method for manufacturing such foil and the use thereof for packaging. The invention further relates to the use of the foil for packaging foods, consumer and pharmaceutical products, and to a packaged products.

### Background

Biaxial orientation processes are commonly used to enhance the performance of polymeric materials. The development of molecular orientation during biaxial forming processes enables to produce packaging materials. In the field, poly(lactic acid) (PLA) has attracted a lot of attention, being a biodegradable polymer available from renewable resources. US2005/0098928 describes polylactic acid (PLA) film biaxially stretched at a temperature of 50-150°C. However, PLA is very brittle and expensive, and produces noise when handling.

In order to tackle these disadvantages, thermoplastic starch has been added to PLA, without compromising the packaging properties of the PLA-containing biaxially oriented foils. WO2011/020170A1 describes a process of producing thermoplastic starch (TPS)/ PLA blends, where TPS is plasticized by sorbitol, glycerol and mixtures thereof. WO2011/020170A1 describes that all materials exhibited low elongation at break as expected from the brittle nature of PLA. Chapleau et al. "Properties of Biaxially Oriented PLA/Starch Blends" Proceedings of the BioPlastics (2006), and Chapleau et al. "Biaxial orientation of polylactide/ thermoplastic starch blends" International Polymer Processing, Special issue on biobased polymers, 22(5) pp 1-8 (2007) both describe biaxial stretchability of polylactide (PLA)/thermoplastic starch (TPS) blends produced using water and glycerol as plasticizers, having TPS contents of 27, 42 and 60 wt%, and glycerol levels of 36 % based on TPS. PLA was grafted using maleic anhydride and peroxide initiator, in order to compatabilize the blends. The maleic anhydride reacts with the hydroxyl group of the starch, thus reducing interfacial tension and generating finer and more homogeneous morphologies. At laboratory scales, biaxial draw ratios at break was found similar to that of PLA. Chapleau et al "Biaxial Orientation and Properties of Polylactide/Thermoplastic Starch Blends", ANTEC (2011) describes similar PLA/TPS blends produced with a 2:1 glycerol:sorbitol mixture, and with TPS contents of 33 and 67 wt%. Films produced from those blends were found to have softer and silkier touch in contrast with the crispier pure PLA films.

However, the use of compatibilizing maleic anhydride is not attractive for food packaging. Also, liquid plasticizers such as glycerol are found to cause increased brittleness when biaxially stretching PLA/TPS sheets. Glycerol evaporates during film making in a biaxially oriented extrusion process, disadvantageously yielding bubble formation. As a result, during the process the films from those sheets will break. Despite not being a liquid plasticizer, sorbitol also causes embrittlement of PLA/TPS sheets or films

WO 2010/133560 describes a thermoplastic processable multi-component composition comprising one or more flour(s), two or more polymers, optionally plasticizers, filler and additives, wherein at least one of the polymers is a biopolymer. A preferred biopolymer is poly(lactic acid) (PLA). The flour provides at least 80 wt% of the starch in the base composition. The other polymer can be a copolymer of vinyl acetate (30-75 wt%) and vinyl laurate (1-30 wt%). The composition is typically obtained in solid form, preferably in the form of pellets. The compositions can be extruded in an extruder, preferably a twin extruder. The composition can be used for making films.

It is an objective of the present invention to provide biodegradable pellets suited for making thin biaxially oriented foils, and thin biodegradable foils with good biaxially stretching properties, and high stretching ratios and good strength in both machine (MD) and transverse (TD) directions. A further aim is that the biodegradable foil is more flexible and has reduced crispy noise (as for instance addressed in WO 2007/027163), improving appearance and consumer's appreciation of packaging. It is also an objective of the present invention to combine these advantageous properties with low densities typically observed for traditionally used, non-biodegradable foils such as polypropylene (PP), i.e. below 1 g/cm³. Of note, PLA foils are reported having densities of about 1.25 g/cm³. There is also a continuing need for facilitating manual tear initiation and propagation for packaging materials that provide a solution to better guide a tear in that packaging material along a tearing line with a reduced risk of having the tear propagating easily away from that projected tearing line (see e.g. WO 2014/04397). Conventional PP and PLA packaging are often associated with such cross-tearing.

### Summary of the invention

Accordingly, the present invention relates to a method for producing renewable polylactic acid-starch pellets comprising compounding 1 - 30 wt% thermoplastic starch (TPS) with 30 - 80 wt% polylactic acid (PLA) and 1 - 20 wt% vinyl acetate - vinyl fatty acid copolymers, preferably vinyl acetate - vinyl laureate and/or vinyl acetate - vinyl crotonic acid copolymer, optionally 1 - 20 wt% TPS compounder and optionally 1 - 20 wt% vinyl acetate - ethylene copolymer, based on the total weight of TPS, optional TPS compounder, PLA and said copolymer(s), using a twin screw extruder. It is preferred that glycerol, sorbitol, glycol and polyethylene glycol are not used, or otherwise in a total amount less than 1 wt%, preferably less than 0.1 wt%, based on the total weight of TPS, optional TPS compounder, PLA and said copolymer(s). TPS forms the dispersed phase, and the specific water-insoluble, non-redispersible vinyl acetate - vinyl fatty acid copolymers, preferably copolymers of vinyl acetate with vinyl laureate and/or vinyl crotonic acid copolymer contribute to the stretchability and void creation deemed necessary for biaxial stretching. TPS, PLA and the vinyl acetate - vinyl fatty acid copolymers, preferably vinyl acetate - vinyl laureate and/or vinyl crotonic acid copolymer and optional vinyl acetate - ethylene copolymer preferably make up for at least 70 wt%, more preferably at least 80 wt% of the total weight of the pellet thus formed.

The invention also pertains to PLA/TPS pellets comprising 1 - 30 wt% thermoplastic starch (TPS) with 30 - 80 wt% polylactic acid (PLA) and 1 - 20 wt% vinyl acetate - vinyl fatty acid copolymers, preferably vinyl acetate - vinyl laureate and/or vinyl acetate - vinyl crotonic acid copolymer, optionally 1 - 20 wt% TPS compounder and optionally 1 - 20 wt% vinyl acetate - ethylene copolymer, based on the total weight of TPS, optional TPS compounder, PLA and said copolymer(s), with the preferred proviso that any glycol, glycerol, sorbitol or polyethylene glycol, if present, is kept at a total amount of glycol, glycerol, sorbitol and polyethylene glycol below 1 wt%, preferably below 0.1 wt%, based on the total weight of TPS, optional TPS compounder, PLA and said copolymer(s). These pellets can be obtained according to the above method. The pellets may comprise optional conventional fillers and additives. TPS, PLA and the vinyl acetate - vinyl fatty acid copolymers, preferably vinyl acetate - vinyl laureate and/or vinyl crotonic acid copolymer and optional vinyl acetate - ethylene copolymer preferably make up for at least 70 wt%, more preferably at least 80 wt% of the total weight of the pellet thus formed.

In a further aspect, the invention pertains to a method of producing a biaxially stretched cast foil, comprising extrusion casting of the aforementioned PLA/TPS pellets at a temperature less than 190 °C, to obtain cast sheets; and biaxially stretching the cast sheets. Processing temperatures are economically lower than for conventional PE, PET or PP and biaxially oriented (BO) PLA extrusion casting processes. The biaxial stretching in machine direction (MD) and transverse direction (TD) can be sequentially or simultaneously. The stretching temperature is between the glass transition temperature and the crystallization temperature of the PLA. The stretching results in increased strength and higher Young's modulus in the final thin film. If desired, the stretching is followed by heat-setting. After casting the film or foil, in embodiments where the PLA/TPS is biaxially oriented sequentially, the non-oriented crystallized film is stretched in the machine direction (MD) in a ratio from 2-7, more preferably in a range from 3-6, and the film is preheated to allow MD stretching and heat set at the outlet part of the MD section before entering the TD (transverse direction) stretching unit. Transverse direction (TD) stretching is in a ratio from 3-10, more preferably 3-6 MD.

The invention also pertains to a biaxially stretched TPS/PLA foil or film comprising 1 - 30 wt% thermoplastic starch (TPS) with 30 - 80 wt% polylactic acid (PLA) and 1 - 20 wt% vinyl acetate - vinyl fatty acid copolymers, preferably vinyl acetate - vinyl laureate and/or vinyl acetate - vinyl crotonic acid copolymer, optionally 1 - 20 wt% TPS compounder and optionally 1 - 20 wt% vinyl acetate - ethylene copolymer, based on the total weight of TPS, optional TPS compounder, PLA and said copolymer(s), with the preferred proviso that any glycol, glycerol, sorbitol or polyethylene glycol, if present, is kept at a total amount of glycol, glycerol, sorbitol and polyethylene glycol of below 1 wt%, preferably below 0.1 wt%, based on the total weight of the foil or film. It is the vinyl acetate - fatty acid copolymer that takes the role as stabilizer/compatibiliser of the TPS-PLA dispersion and of the formation of voids / vacuoles rather than the chemical modifications and grafting agents used in the art instead. The optional vinyl acetate-ethylene copolymer takes the role of co-compatibilizing the vinyl acetate - fatty acid copolymer of the PLA and TPS.

As said vinyl acetate - vinyl fatty acid copolymers, the vinyl acetate - vinyl laureate copolymer (VAc-VL) is most preferred. It is commercially available under the tradenames Vinnex® LL8880, Vinnex® LL8802, VINNAPAS® B 500/20 VL, VINNAPAS® B 500/40 VL, VINNAPAS® C 305, VINNAPAS® C 341 and/or VINNAPAS® C 501, preferably Vinnex® LL8880 and/or Vinnex® LL8802, most preferably Vinnex® LL8880 manufactured by Wacker Chemie GmbH. Reference is made to WO 2010/133560, its contents herewith incorporated by reference.

In the context of the invention, the term 'sheet' is used for the material obtained before stretching and 'film' or 'foil' is used after stretching. The renewable films meet all of the above objectives, voided, crisp-free uniform thin films with advantageously low densities below 1 g/cm³, comparable to conventional PE-PP films. In one embodiment, the density is between 0.5 and 1 g/cm³, more preferably between 0.6 and 1 g/cm³, even more preferably between 0.7 and 1 g/cm³. In one embodiment, the density is between 0.8 and 1 g/cm³. These densities are preferably measured at 20°C, more preferably with pressures of 0.2 - 1.5 bar, even more preferably 0.25-1.3 bar.

Without wishing to be bound by theory, the inventors believe that the low densities of the foil of the invention are achieved because holes or voids are formed in the film by biaxially stretching, preferably by a two-step stretching process wherein the foil is in a first stretching step stretched in one lateral direction in the plane of the foil, most preferably the MD direction, and in a subsequent second stretching step in the other lateral direction in the plane of the foil, particularly the lateral direction perpendicular to the lateral direction of said first stretching step, most preferably the TD direction.

The size of the holes or voids present in the film or formed in the film by biaxially stretching have a diameter of 0.1-2.5 microns, preferably 0.2-2.2 microns, more preferably 0.3-2 microns, most preferably 0.4-1.8 microns. The length of said holes or voids is preferably 0.5-12 microns, preferably 0.8-10 microns, more preferably 1-8 microns, most preferably 1.2-6 microns. The length-to-diameter (L/D) ratio of said holes or voids is preferably greater than 1, preferably greater than 1.5, more preferably greater than 2.

The film preferably has a thickness between 20 and 50 microns, preferably between 20 and 40 microns in thickness, and a commercially attractive tensile strength in both machine and transverse directions. The blends of the invention make the use of chemical modification and grafting agents such as maleic anhydride superfluous.

The invention also pertains to the use of such foils and films for packaging foods, consumer products or pharmaceutical products, and to packaging foils comprising or composed of the biaxially stretched TPS/PLA foil. The biodegradable packaging materials free from fossil source polymers such as PE, PP and PET have a natural look and feel, and exhibit tear in trans direction rather than cross direction.

### Detailed description

In the context of the invention, the vinyl acetate - vinyl fatty acid copolymers is referred to as 'polymeric compatibilizer.' The optional vinyl acetate - ethylene copolymer is referred to as 'polymeric co-compatibilizer'.

Starch in its native form acts as a filler and causes high brittleness. However, if the starch is gelatinized or molten to form thermoplastic starch (TPS), it can be blended into PLA to form a polymer blend. In the pellets, biaxially oriented foils and packaging of the invention, thermoplastic starch is present preferably in amounts of 3-28 wt%, more preferably 4-25 wt%, even more preferably 7-20 wt%. The TPS starch may be natural starch, modified starch, starchy material and/or reclaimed starch. Natural starch is starch from vegetable sources, e.g. from potato, wheat, corn, tapioca, rice, cassava, sorghum, triticale, and peas (including starch from genetically modified starch-producing plants). Natural starch is commonly obtained from crops of plants specifically grown for their starch production. Modified starch is chemically or physically modified starch (oxidised, carboxymethylated, hydroxyalkylated, acetylated, phosphorylated, enzymatically treated starch and the like). Starch could be provided by starchy materials containing a high proportions of starch, examples being flour such as wheat flour (about 73% starch) or pretreated wheat flour, i.e. after removal of fibers (about 84% starch). It is however preferred not to use flour. Reclaimed starch is starch generated from the food producing industry as by-product. This means that no additional crops have to be grown to provide the starch for the present invention and no additional agricultural areas have to be utilized. Also, using reclaimed starch has the advantage that it does not compete with food or animal feedstock. Preferably the starch comprised in the biaxially stretched foil is potato starch, more preferably reclaimed potato starch, most preferably reclaimed potato starch of the second generation. Reclaimed potato starch, also called cake starch, is a side-stream potato starch from the potato-processing industry. Prior to the extrusion, the reclaimed potato starch may be subjected to a purification step to minimize the amount of unwanted content (i.e. fibres, proteins and cellulose).

The 1-30 wt%, preferably 3-28 wt%, more preferably 4-25 wt%, even more preferably 7-20 wt% TPS in the pellets, biaxially oriented foils and packaging of the invention may be compounded with 1 - 20 wt%, preferably 5-15 wt% of a conventional TPS compounder, said TPS compounder preferably being polyvinyl acetate homopolymer (VAc) and/or vinyl acetate - ethylene copolymer (VAc-E), more preferably vinyl acetate - ethylene copolymer. The above wt% are calculated based on the total weight of TPS, optional TPS compounder, PLA, and said copolymer(s) as defined above. The functions of the TPS compounder and the co-compatibilizer are distinct, in that any TPS compounders serves to render the starch thermoplastic, and the co-compatibilizer serves to improve disperging the TPS into the PLA matrix. If the TPS compounder includes vinyl acetate - ethylene copolymer (VAc-E), the above wt% of the optional TPS compounder, are not included in the above wt% of optional co-compatibilizer.

With the reference 'based on the total weight of TPS, optional TPS compounder, PLA and said copolymer(s)', the term 'said copolymer(s)' includes the vinyl acetate - vinyl fatty acid copolymers, preferably vinyl acetate - vinyl laureate and/or vinyl acetate - vinyl crotonic acid copolymer, and optional vinyl acetate - ethylene copolymer (co-compatibilizer).

In the pellets, biaxially oriented foils and packaging of the invention, polylactide (poly(lactic acid); PLA) is preferably used in an amount of 40-70 wt%. The term PLA is taken to mean both homopolymers built up from lactic acid units and copolymers comprising predominantly lactic acid units (preferably > 50%, more preferably > 75%) in compounds with other hydroxylactic acid units. Said PLA preferably is recyclate or regranulate PLA, which has the advantage that PLA resources are reused and waste is reduced.

Preferably 2 - 20 wt%, preferably 2 - 15 wt%, more preferably 2-10 wt% vinyl acetate - vinyl fatty acid copolymers is comprised in said pellets, sheets, foils and films according to the invention, said weight based on the sum of TPS, optional TPS compounder, PLA, the polymeric compatibilizer and optional co-compatibilizer.

The polymeric compatibilizer comprises a copolymer of vinyl acetate with one or more further comonomers from the group comprising vinyl fatty acid esters or vinyl esters. Suitable vinyl esters in the copolymer are those of carboxylic acids having 1 to 12 carbon atoms. Vinyl acetate, vinyl propionate, vinyl butyrate, vinyl 2-ethylhexanoate, vinyl laureate, 1-methylvinyl acetate, vinyl pivalate and vinyl esters of alpha-branched monocarboxylic acids having 9 to 13 carbon atoms, e.g. VeoVa 9®, VeoVa 10®, VeoVa 11® manufactured by Hexion Inc., are preferred. The polymeric compatibilizer preferably comprises from 5 to 70 mol% of vinyl acetate monomers and from 5 to 70 mol% of said one or more further comonomers from the group comprising vinyl fatty acid esters or vinyl esters having from 1 to 12 carbon atoms in the carboxylic acid radical, e.g. vinyl acetate, vinyl propionate, vinyl butyrate, vinyl 2-ethylhexanoate, vinyl laureate, 1-methylvinyl acetate, vinyl pivalate and vinyl esters of alpha-branched monocarboxylic acids having 9 to 13 carbon atoms, e.g. VeoVa 9®, VeoVa 10®, VeoVa 11® manufactured by Hexion Inc., ; where the polymers can additionally contain the above-mentioned auxiliary monomers in the amounts indicated and the figures in mol% in each case add up to 100 mol% . In one embodiment, it is preferred to use a copolymer from vinyl acetate and one or more further vinyl fatty esters, such as vinyl esters of α-branched monocarboxylic acids having from 9 to 13 carbon atoms, and/or combinations thereof. Preferred examples of vinyl acetate - vinyl fatty acid copolymers are vinyl acetate - vinyl laureate and/or vinyl acetate - vinyl crotonic acid copolymer, most preferred is vinyl acetate - vinyl laurate copolymer (VAc-VL).

Preferred polymeric compatibilizers are commercially available under the tradenames Vinnex® LL8880, Vinnex® LL8802, VINNAPAS® B 500/20 VL, VINNAPAS® B 500/40 VL, VINNAPAS® C 305, VINNAPAS® C 341 and/or VINNAPAS® C 501, preferably Vinnex® LL8880 and/or Vinnex® LL8802, most preferably Vinnex® LL8880 manufactured by Wacker Chemie GmbH. These are copolymerization products of vinyl acetate with vinyl laurate or crotonic acid and are copolymers that are more flexible than homopolymer resins. Preferably the polymeric compatibilizers contain 10-50 mol% vinyl fatty acid, preferably 20-40 mol% vinyl laureate and 10-50 mol% vinyl acetate. Reference is made to WO 2010/133560, its contents herewith incorporated by reference.

It is preferred that the melting point properties of the polymeric compatibilizer are such that the melting temperature is low, preferably below 100°C, more preferably below 60°C.

In one embodiment, poly(vinyl acetate-co-crotonic acid) or a mixture of poly(vinyl acetate-co-crotonic acid) and vinyl acetate - vinyl laurate - ethylene copolymer may be used with said melting point properties. The compatibilizing copolymer gives the biaxially stretched foil more flexibility, less crispiness and noise and better (trans-)tearing characteristics.

The TPS, PLA and the polymeric compatibilizer and optional co-compatibilizer can be compounded to immiscible polymer blends and transformed to melt processable compositions or pellets using conventional extrusion processes, where starch destructurization and compounding may be carried out simultaneously or subsequently (as described in WO 2011/053131).

TPS, optional TPS compounder, PLA and the vinyl acetate - vinyl fatty acid copolymer, and optional vinyl acetate - ethylene copolymer (co-compatibilizer) preferably make up for at least 70 wt%, more preferably at least 80 wt%, more preferably at least 85 wt%, most preferably at least 90 wt% of the total weight of the pellet, foil, film and packaging of the invention.

The pellets, biaxially oriented foils and packaging of the invention may include further components. Such further components may be 2-30 wt%, preferably 5-20 wt% of biopolyester, based on the total weight of the composition. Biopolyesters make it possible to further tune the properties of the material, such as giving it better flexibility or stiffness. Examples of suitable bio-polyesters are polybutyrate adipate terephthalate (PBAT), polybutylene succinate/ polybutylene succinate adipate (PBS/PBSA) blends, polycaprolactone (PCL), polyhydroxyalkanoates (PHA) like poly(3-hydroxybutyrate-co-3-hydroxyvalerate (PHBV) and combinations thereof. PBAT is a biodegradable random copolymer, specifically a copolyester of adipic acid, 1,4-butanediol and dimethyl terephthalate. PBAT is produced by many different manufacturers and may be known by the brand names Ecoflex, Ecoworld, Xinfu, Eastar Bio, and Origo-Bi. PBS is known by the brand names Bionolle (Showa Denko) or GsPLA (Mitsubishi Chemical). Optional further components may be 0.1-3 wt% of further additives, preferably processing aids such as Joncryl chain extenders, or melt flow accelerators such as magnesium stearate. Optional further components comprised in the biaxially stretched foil may be fillers, such as calcium carbonate, talc and/or fibres, in an amount preferably up to 20 wt% of the composition.

The pellets, biaxially oriented foils and packaging of the invention contain less than 1 wt% of the sum of liquid plasticizers, preferably plasticizers comprising glycerol, sorbitol, glycol and polyethylene glycol, preferably less than 0.5 wt%, even more preferably less than 0.1 wt%, most preferably substantially 0 wt%, based on the total weight of TPS, optional TPS compounder, PLA and said copolymer(s). In one embodiment, the amount of any amide functionalized compound such as urea, formamide, ethylene- bisformamide or mixtures thereof is kept low similarly, i.e. less than 5 wt%, preferably less than 1 wt%, more preferably less than 0.5 wt%, even more preferably less than 0.1 wt%, most preferably substantially 0 wt%, based on the total weight of TPS, optional TPS compounder, PLA and said copolymer(s).

The pellets, biaxially oriented foils and packaging of the invention preferably contains less than 1.5 wt% of chemical modifiers and grafting agents such as maleic anhydride, preferably less than 1 wt%, more preferably less than 0.5 wt%, even more preferably less than 0.1 wt%, most preferably substantially 0 wt%, based on the total weight of TPS, optional TPS compounder, PLA and said copolymer(s).

The biaxially stretched foil may have various thickness, preferably 100-700 µm, more preferably 125-600 µm, more preferably 150-500 µm, even more preferably 175-450 µm, most preferably 200-400 µm. Thinner foils may also be obtained, preferably with a thickness of below 100 µm, more preferably below 75 µm, even more preferably below 50 µm, most preferably below 40 µm.

The biaxially stretched film typically has a stretching ratio defined as the machine direction (MD) x transverse direction (TD), where MD ranges from 1-7, preferably 1.5-6, more preferably 2-5, even more preferably 3-4.5 and the TD ranges from 2- 10, preferably 2.5-8, more preferably of 3- 6, even more preferably 3-5. The MD and TD lie in the plane of the foil, where MD is the extrusion direction of the foil and TD is the direction perpendicular to the MD. Worded differently, the MD is the parallel direction to the direction of the movement of the forming foil on a cast foil extrusion machine. The biaxially stretched foil typically has a larger tensile stress in the MD than in the TD. Typically said foil has a tensile stress of 10-70 MPa in the MD, preferably 15-60 MPa, more preferably 20-55 MPa, most preferably 25-50 MPa. The biaxially stretched foil combines this with a tensile stress of 5-60 MPa in the TD, preferably 10-50 MPa, more preferably 15-40 MPa. The biaxially stretched film typically has a larger elongation in the MD than in the TD. Typically said foil has an elongation of 10-500% in the MD, preferably 40-400%, more preferably 100-350%. The biaxially stretched foil combines this with an elongation of 10-250% in the TD, preferably 50-225%, more preferably 75-200%.

The biaxially stretched foil typically has a larger E-modulus (E-mod) in the MD than in the TD. Typically, said foil has a E-modulus of 0.5-2.3 GPa in the MD, preferably 0.7-2.3 GPa, more preferably 0.9-2.3 GPa. The biaxially stretched foil combines this with a E-modulus of 0.3-2.0 GPa in the TD, preferably 0.5-2.3 GPa, more preferably 0.7-2.3 GPa.

The biaxially stretched foil typically has a higher Young's modulus in the MD than in the TD. Typically, said foil has a Young's modulus of 0.1-0.5 GPa in the MD, preferably 0.15-0.5 GPa, more preferably 0.2-0.5 GPa. The biaxially stretched foil combines this with a Young's modulus of 0.05-0.4 GPa in the TD, preferably 0.07-0.4 GPa, more preferably 0.1-0.4 GPa.

The biaxially stretched foil typically has a higher yield stress (Fyield) in the MD than in the TD. Typically, said foil has a yield stress of 5-50 MPa in the MD, preferably 10-40 MPa, more preferably 15-30 MPa. The biaxially stretched foil combines this with a yield stress of 3-40 MPa in the TD, preferably 5-30 MPa, more preferably 10-25 MPa.

The biaxially stretched foil typically has a higher break stress (Fbreak) in the MD than in the TD. Typically, said foil has a break stress of 10-70 MPa in the MD, preferably 15-60 MPa, more preferably 17-50 MPa, even more preferably 18-40 MPa, even more preferably 19-35 MPa, most preferably 20-30 MPa. The biaxially stretched foil combines this with a break stress of 7-60 MPa in the TD, preferably 10-60 MPa, more preferably 12-60 MPa, more preferably 13-60 MPa, more preferably 14-60 MPa, more preferably 15-60 MPa, even more preferably 16-50 MPa, even more preferably 17-40 MPa, even more preferably 18-35 MPa, most preferably 19-30 MPa.

The biaxially stretched foil typically has a higher yield strength (Syield) in the MD than in the TD. Typically said foil has a yield strength of 1.0-4.0 MPa in the MD, preferably 1.5-3.5 MPa, more preferably 2-3,5 MPa. The biaxially stretched foil combines this with a yield strength of 0.5-2.0 MPa in the TD, preferably of 0.7-2.0 MPa, more preferably 1-2.0 MPa.

The biaxially stretched foil typically has a higher break strength (Sbreak) in the MD than in the TD. Typically said foil has a break strength of 10-200 MPa in the MD, preferably 15-150 MPa, more preferably 20-150 MPa. The biaxially stretched foil combines this with a break strength of 15-75 MPa in the TD, preferably of 20-70 MPa, more preferably of 30-65 MPa.

The biaxially stretched foil according to the invention contains cavities or vacuoles.

The biaxially stretched foil is according to the invention is breathable. Said foil has a certain permeability to water, oxygen and carbon dioxide.

In an embodiment of the present invention, the biaxially stretched foil is part of a system comprising multiple layers, of which at least one is the biaxially stretched foil according to the invention. Further layers of said system may include one or more of the following: PLA, bio-polyesters, such as PBAT, PBS/PBSA, PCL, PHA and/or PHBV and other bioplastic compounds.

Regarding the method of making the biaxially stretched foil, preferably in the cast foil extrusion process, prior to extruding, the starch, PLA and the polymeric compatibilizer, and optionally further components as described hereinbefore are subjected to compounding, preferably to obtain pellets. Accordingly, it is preferred that the starch, PLA and the polymeric stabilizer/compatibilizer, and optionally further components are provided as pellets to the extrusion step.

Compounding is carried out on a twin-screw extruder. Typically, the starch, PLA, and the polymeric compatibilizer, and optionally further components are fed to the twin-screw extruder and a temperature profile is applied such to obtain required melting temperature of the composition or various components. Said temperature profile is in the range of 20-190 °C, preferably 40-180 °C, more preferably 50-170 °C. The melting temperature is preferably 130-190°C, more preferably 140-180°C, most preferably 150-170°C. Preferably degassing, more preferably atmospheric degassing is further performed. The obtained strands of material are subsequently cut to pellets, preferably through underwater pelletizing.

The water content during extrusion compounding may be 0-10 wt% based on the amount of starch in the compound, preferably 0-4 wt%.

The extruding step in the cast foil extrusion process according to the invention is preferably carried out with a screw foil extruder, preferably a single screw foil extruder. Said screw foil extruder preferably comprises a foil die and calander, preferably a tap water cooled calander, more preferably a three-roll tap water cooled calander. It is preferred that the extruder has multiple heating zones, more preferably at least four heating zones, with at least a separate heating of the adapter and the die.

The water content of the compound should be low enough during extrusion melting for film production. Preferably the water content is below 1 wt%, based on the amount of starch in the compound, more preferably below 2000 ppm, even more preferably below 1000 ppm, more preferably below 500 ppm. This water content may be obtained by predrying the compound or by degassing during film extrusion. Consequently, the process according to the invention may further comprise a drying step prior to extruding. In said drying step the provided starch, PLA, and the polymeric compatibilizer, and optionally further components, is dried before or after compounding to preferably pellets to a water content of below 1 wt%, based on the amount of starch in the compound, more preferably below 2000 ppm, even more preferably below 1000 ppm.

Alternatively, or additionally, the extrusion step in the process according to the invention may further comprise simultaneous degassing to obtain said water content.

During extrusion, temperature is preferably at most 180°C, more preferably at most 170°C. Accordingly temperatures during extrusion are of 40-190°C, preferably 50-180°C, more preferably 60-170°C. By keeping the temperature below 170°C, the better the properties of the foils. Starch will thermo-mechanically breakdown above 170 °C. While thermoplastic starch needs water, PLA loses properties at high temperatures due to hydrolyses of ester linkages.

During extrusion, the temperature at the die needs to be set as low as possible to avoid water bubbles in foil without increasing die pressure too much. The die pressure should be at most 450 psi*10, more preferably at most 400 psi*10. Accordingly the die pressure during extrusion is preferably 50-400 psi*10, more preferably 60-300 psi*10, most preferably 70-250 psi*10.

During extrusion, preferably substantially constant temperature, pressure and amperage is used.

During extrusion, preferably stretching in the MD is avoided. This may be accomplished by keeping the calander speed as low as possible, preferably lower than 300 rpm, more preferably lower than 250 rpm, even more preferably lower than 200 rpm, most preferably lower than 150 rpm. Accordingly, the calander speed is preferably 30-300 rpm, more preferably 50-250 rpm, even more preferably 60-200 rpm, most preferably 75-150 rpm.

During extrusion, thickness of the foil may be adjusted at the die by adjusting calander speed within the above ranges. Preferably the calander speed is adjusted so as to obtain a thickness of the foil of 100-700 µm, more preferably 125-600 µm, more preferably 150-500 µm, even more preferably 175-450 µm, most preferably 200-400 µm. More preferably the calander speed is adjusted so as to obtain a thickness of the foil of below 100 µm, more preferably below 75 µm, even more preferably below 50 µm, most preferably below 40 µm.

The stretching of the obtained foil in the method according to the invention is performed in two directions (i.e. biaxial stretching), preferably the two directions in the lateral plane of the foil, more preferably the MD and TD. Preferably, biaxial stretching of the obtained foil is performed in one lateral direction at the time (sequentially, not simultaneously), meaning that said biaxial stretching preferably is performed in a two-step stretching process, wherein in a first step stretching is performed in one lateral direction and in a subsequent second step stretching is performed in the other lateral direction, particularly in the same plane and perpendicular to the lateral direction of said first stretching step. In the most preferred embodiment, said stretching of the obtained foil is performed in two steps: first stretching is performed in the MD direction and subsequent thereto stretching is performed in the TD direction.

The biaxial stretching of the obtained foil in the method according to the invention in the two directions in the lateral plane of the foil is preferably not performed in a single step. In other words: Biaxial stretching according to the invention preferably does not involve stretching a foil in multiple directions in the lateral plane of the foil simultaneously. Again in other words: preferably the foil is not stretched in the MD and TD directions at the same time. Most preferably, the biaxial stretching of the foil is not performed by blow moulding.During biaxial stretching the water content in the foil should be below 1000 ppm, preferably below 250 ppm, based on the amount of starch in the compound. This water content may be obtained by predrying the foil or by degassing during film extrusion. Consequently, the process according to the invention may further comprise a drying step prior to stretching. In said drying step the obtained foil from the extrusion step is dried to a water content of below 1000 ppm, preferably below 250 ppm, based on the amount of starch in the compound.

Alternatively, or additionally, the extrusion step in the process according to the invention may further comprise simultaneous degassing to obtain said water content.

Typically during the stretching step stretching ratios are used of MD x TD, where MD ranges from 1.2-4.5, preferably 1.5-4, more preferably 1.8-3.8, most preferably 2-3.5 and the TD ranges from 2- 5, preferably 2.5- 4.5, more preferably of 3- 4.2.

Stretching is preferably performed under heating, more preferably at a temperature of 30-80°C, even more preferably at 40-70°C, most preferably 45-65°C.

During the process according to the invention, preferably less than 5 wt% of a liquid plasticizer is used, preferably less than 1 wt%, more preferably less than 0.5 wt%, even more preferably less than 0.1 wt%, most preferably substantially 0 wt%. Said plasticizer preferably is a volatile liquid starch plasticizer, preferably a functionalized compound, more preferably a polyfunctional alcohol or an amide functionalized compound. The polyfunctional alcohol may be, for example glycerol, sorbitol, polyethylene glycol or mixtures thereof. The amide functionalized compound may be, for example, urea, formamide, ethylene- bisformamide or mixtures thereof.

During the process according to the invention, preferably less than 1.5 wt% of chemical modifier is used, preferably less than 1 wt%, more preferably less than 0.5 wt%, even more preferably less than 0.1 wt%, most preferably substantially 0 wt%.

The invention is further illustrated by the following, non-limiting examples.

### Examples

### Materials and Methods - Lab scale

### Compounding

Materials were made on standard Solanyl twin-screw extruder set-up. A typical setup was: Components present in the composition were fed into the hopper of a Berstorff ZE40A corotating twin screw extruder (L/D=38) with a temperature profile of 20/70/110/140/145/145/100/95° C at 130 rpm. Atmospheric degassing took place at 0.7 L. The resulting strands of material was cut to pellets through underwater pelletizing.

### Foil casting and Stretching lab scale

Foils were made on a lab single screw foil extruder: Collin extruder (30 Ø by 25 d, 20A, 15 kW) with a 10 and-or a 20 cm foil die and equipped with a Collin Glattkalander (1982, 2A, 0.4 kW), i.e. a three-roll tap water cooled calander. The extruder had 4 heating zones with separate a heating of the adapter and the die. The machine was optimized towards a constant temperature, pressure (in psi*10) and amperage (in A). Thickness of foil was adjusted principally at the die keeping the calander speed as low as possible to avoid stretching in the MD.

### Biaxial stretch testing

Biaxial stretching was done on a Karo IV lab stretcher, which has high stretching ratios starting from 1.01 x 1.01 up to 10 x 10, a heating capability up to 400 °C and up to 3 independent heating modules, a sample loading station outside the hot oven area and exchangeable clip tables.

Stretching was performed on pieces (7 by 7 cm) cut manually from the foils. Stretching was performed in a two-step mode: first stretching in MD and then in TD. During stretching also the force-strain profiles were recorded.

### Blow moulding testing [comparative]

Foils were blow moulded in a comparative example, meaning that they were biaxially stretched in a *single step* in the two directions in the lateral plane of the film, i.e. in both the MD and TD directions *at the same time,* as opposed to the above described *two-step mode* in the biaxial stretch testing involving *first stretching in MD and only afterwards in TD.* Blow moulding of the foils was performed on an E45 Collin extruder (Tₘₑₗₜ 174°C, 20 rpm, 5.4 A, 55 bar, width approximately 45 cm).

### Density analysis

Density analyses of foils were performed based on the ISO 4590 norm. The equipment used was Pycnometer Ultrapyc 1200e with a heater at 20°C. Density measurements were performed at pressures of 0.25 and 1.3 bar.

### Cryogenic Scanning Electron Microscope (Cryo-SEM)

Cryo-Sem was done with FEI Magellan 400. This is an ultra high resolution field emission scanning electron microscope (FESEM) with Leica VCT100 cryotransfer system and Leica cryoMED020 cryopreparation unit. It has Oxford Aztec EDX; in-lens SE and BSE detection and "under" lens SE and BSE detection. SEM pictures of foils were made from the MD and TD direction after cutting them cryo-genically in these two directions.

### Materials and Methods - Industrial scale

Components were predried below 1000 ppm moisture and extruded on an industrial scale (tonne scale) film cast extruder with a melting temperature of around 180-190°C. Stretching was done with an industrial size Brueckner BO line. A 650 kg/h maximum output extruder setup with 3-layers. Flat casting die and sequential stretching (MD and TD). Deckle width is 4 m.

### Example 1 - Lab scale: Production and Properties of biaxially stretched films

Compounding was performed with the following components with a melting temperature at 170°C:
1) 22.4 wt% reclaimed potato starch and 9.6 wt% Vac-E; 45 wt% PLA; 5 wt% VAc-VL; 18 wt% PBAT and 1.9 wt% water
2) 22.4 wt% reclaimed potato starch and 9.6 wt% Vac-E; 45 wt% PLA; 5 wt% VAc-VL; 18 wt% PBS and 1.9 wt% water

The difference between 1) and 2) is the use of PBAT or PBS as an optional further additive. PBS is a bit more rigid then PBAT in pure form resulting in more rigid foil and oriented films.

The materials were dried below 2000 ppm before extrusion film casting. Film casting was performed at a melting temperature of 170° C.

Processing was smooth and production was stable without formation of fumes or bubbles. Long-term processing was stable and films were uniform in thickness, yielding values below 300 µm. Film surfaces were smooth, with an ivory look and feel.

In table 1 the properties of products 1) and 2) are shown after film casting, before biaxial stretching.

**Table 1**

| **Product cast film 0.3 mm** | **Tensile stress (MPa)** | | **Elongation (%):** | | **Secants modulus (GPa):** | |
|---|---|---|---|---|---|---|
| | *MD* | *TD* | *MD* | *TD* | *MD* | *TD* |
| 1 | 29 | 21 | 300 | 175 | 1.1 | 0.9 |
| 2 | 40 | 30 | 125 | 87 | 1.5 | 1.3 |

### Example 2 - Lab scale: Stretching and Properties of biaxially stretched films

The results of stretching trials of the biaxially stretched films of example 1 are shown in table 2. The MD/TD speed was 50%/s. The clip temperature started at 50°C and stretching was performed at 62°C at constant speed profile and sequential draw profile.

**Table 2**

| **Sample Material** | **Thickness (µm)** | **Stretch ratio [MD x TD]** |
|---|---|---|
| 1 | 300 | 2.2 x 3.5 |
| 2 | 400 | 2.2 x 3.5 |
| 2 | 400 | 2.5 x 4.0 |
| 2 | 400 | 2.4 x 3.8 |
| 2 | 400 | 2.4 x 3.8 |
| 2 | 400 | 2.6 x 4.0 |

The material has shown strength increase during stretching.

Table 3 shows typical properties of a biaxial stretched film of material 1) of Example 1. The film is flexible. The film tears in the MD and not in the TD direction as with BO-PLA or BO-PP. The material is softer and more flexible then a BO-PLA films.

**Table 3**

| | MD | TD |
|---|---|---|
| E-mod (GPa) | 0.29 | 0.14 |
| Fyield (MPa) | 18.2 | 16 |
| Fbreak (MPa) | 21.7 | 20.4 |
| Syield (MPa) | 2.4 | 1.4 |
| Sbreak (MPa) | 187 | 59 |

While the original density of material 1) of example 1 was 1.3 g/cm³, the density of the biaxially stretched film thereof was below 1 g/cm³.

### Example 3 [comparative] - Lab scale: Production of films with added plasticizer (glycerol)

The following compounds containing plasticizer (glycerol) were tested:

**Table 4**

| | **SP10175** | **SP10137** | **SP10140** | **SP10138** |
|---|---|---|---|---|
| Starch | 22 | 25.4 | 0 | 25.4 |
| Wheat Flour | 0 | 0 | 25.4 | |
| Vac-E | 16.5 | 28 | 28 | 24.6 |
| VAc | | 1 | 1 | |
| VAc-VL | 6 | 0 | 0 | 5 |
| PLA | 55 | 45 | 45 | 45 |
| Processing aids | 0.5 | 0.6 | 0.6 | 0 |
| **Total** | **100** | **100** | **100** | **100** |
| | | | | |
| **Glycerol** | **1.5** | **5.1** | **5.1** | 0 |
| Water compound | 1-2 | 1-2 | 1-2 | 4 |

It was found that in foil cast processing, SP10137 and SP10140 give bubbles at higher water contents and glycerol water vapour and die swell at higher processing temperatures and speeds. SP10175 has a reduced glycerol content and some VAc-VL giving improvement in foil cast processing. Predrying the materials before extrusion gives a relative brittle film with still some die swell. Materials with lower glycerol content are more difficult to process to in uniform films with uniform thickness, processing temperature increases during longer time production. SP10138 was compound without glycerol and VAc-VL but with relatively high amount of water. At high speeds and processing temperatures the film gave bubbles and broke. The film gave large die swell. At lower temperatures it was possible to make the film but it was relatively thick.

### Example 4 [comparative] - Lab scale: Stretching of films with added plasticizer (glycerol)

For the materials of example 3 containing glycerol or relatively high water content it was not possible to obtain films at low thickness or high stretching ratios with good strength. The materials are either broken or still weak or brittle after stretching. The material SP10175 with lower glycerol performed yielded films with more strength but still relatively thick. Material SP10138 without glycerol had too much water to be able to be stretch without breaking at high stretch ratios due to presence of holes from bubbles formed during cast extrusion.

Films with glycerol were weak showing breaking already at high thickness and low forces. A thicker film (400 µm or higher) of SP10175 with low amount of glycerol and VAc-VL could be stretched at higher draw ratios 3.3 (MD) and 3.9 (TD) given high forces during stretching.

### Example 5 [comparative] - Lab scale: Production and stretching of films from flour instead of starch

The influence of using flour instead of starch for the production and stretching of films was investigated. In example 3, films were cast from compounds SP10137 (starch-based) and SP10140 (flour-based). SP10137 and SP10140 were similar in composition, only in SP10140 all starch of SP10137 was replaced by flour (table 4). While it was found that starch-based SP10137 did not yield a usable foil with sufficient quality, the foil from flour-based SP10140 already broke at low stretching on the fibre particles. It was hence found that it was not possible to produce a thin biaxially stretched foil from a film cast from a flour- instead of a starch-based compound as biaxial stretching causes tears in materials. This is probably because of the presence of particles from the flour: fibres had the size, thickness and length of the film, hence not rendering it possible to make a thinner foil. It was hence found that flour is less suitable than starch.

### Example 6 rcomparativel - Properties of films produced through different procedures

Films were cast from material SP10299, which contains 16.3 wt% reclaimed potato starch; 15.4 wt% Vac-E; 45 wt% PLA; 5 wt% VAc-VL; 18 wt% PBAT and 0.3 wt% magnesium stearate.

A reference material being a direct cast film was produced on industrial sheet extrusion (single screw) before stretching. No biaxial orientation was applied.

An SP10299 film was produced by blow-moulding, meaning that it was biaxially stretched *in* a *single step* in the two directions in the lateral plane of the film, i.e. in both the MD and TD directions *at the same time.*

An SP10299 film was produced on lab-scale by biaxial stretching according to the invention, meaning that stretching was performed in *two steps:* first in the MD direction and subsequent thereto in the TD direction. This was a mono-layer, without a PLA outer layer.

A similar SP10299 film was obtained from industrial production. This was a multilayer, containing a thin outer layer of PLA. It was also biaxially stretched by the above *two step stretch process* according to the invention.

Density measurements of these films in table 5 show that films from the same SP10299 material that were biaxially stretched by the two-step process of the invention displayed lower densities than the unstretched, direct cast film, and much lower densities than the blow-moulded film which was biaxially stretched in a single step. This applies to both low and high pressure conditions. Performing biaxial stretching according to the invention in two-steps (first the MD direction and subsequenly the TD direction) hence yields a material with much lower density than when biaxial stretching is performed in one step (the MD and TD directions at the same time) by blow-moulding. The two-step biaxial stretching according to the invention also yields a material with a lower density than when no stretching at all is performed. The above applies to both the two-step biaxially stretched film that was produced as a lab-scale monolayer without PLA outer layer as well as the one that was obtained from industrial production being a multilayer containing a thin outer layer of PLA.

It is further noted that the SP10299 film which was biaxially stretched in a single step by blow-moulding had an even higher density than the non-stretched direct cast film.

**Table 5**

| Sample | Density (g/cm³) at 0.25 bar | Density (g/cm³) at 1.3 bar |
|---|---|---|
| SP10299 direct cast film | 1.18 | 1.14 |
| SP10299 blow moulding [1 step biaxial stretch] | 1.27 | 1.27 |
| SP10299 2 step biaxial stretch [monolayer] | 0.67 | 1.00 |
| SP10299 2 step biaxial stretch [multilayer] | 0.70 | 0.77 |

SEM images of these films showed that after biaxially stretching in the two-step process of the invention, holes or voids are formed in the film. This probably explains the lower density of the biaxially stretched films relative to the unstretched, direct cast film.

SEM images of the direct cast film in the cross direction (TD) and the machine direction (MD) showed that the outlayer was clearly visible as a smooth compact film with a thickness of about 24-28 micron. In both TD and MD the SEM picture showed that the film was rather compact but rough with small holes related to breaking of the film and that the inner part contained starch rich regions (oval-round shaped) enclosed by PLA-compatibiliser-PBAT. No orientation was seen in the film in the TD direction and some orientation was seen in the film in the MD direction.

SEM images of the monolayer film stretched biaxially by the two-step process of the invention in respectively MD and TD directions showed no top layers, because the film was made from a mono-layer cast film. Less orientation was seen in the stretch phase with large holes. Some large particle-like structures were observed and holes were more pronounced possible because no filter was used to filter larger incomplete molten starch parts and less efficient melting in lab extrusion compared to industrial extrusion.

SEM images of the multilayer film stretched biaxially by the two-step process of the invention in respectively MD and TD directions showed that the small thin outlayer was compact and smooth (PLA pure). The orientation in the inner film was also observe on the MD picture; less orientation in the inner film was seen on the TD picture. The two step stretch process of the invention leads to relatively large holes in the film with a length to diameter (L/D) ratio > 1. It is likely that the holes were formed during the first stretching phase (MD) at interfaces starch in the PLA-polyester-compatibliser blend. This process was found to yield lower film density during stretching but also lead to limitations in stretchability and thickness achievable. The size of the holes was approximately 0.5-1.5 micron diameter with length up to ten micrometers. It looked as if the more stringy-elastic PBAT-compatibiliser polymers were pulled out in second stretching phase.

### Example 7 [comparative] - Lab scale: Properties of films that were biaxially stretched in a single step by blow-moulding instead of two-step biaxial stretching

In example 6, SP10299 films that were biaxially stretched in a single step by blow-moulding (MD and TD simultaneously) were compared to SP10299 films that were biaxially stretched in two steps (first MD, subsequently TD) according to the invention in terms of their densities. It was there found that films of the same SP10299 material with much lower densities were obtained when biaxial stretching was performed in two steps according to the invention instead of in single step by blow moulding (Table 5).

Further comparison revealed that SP10299 films that were biaxially stretched in two steps were smooth, had opaque appearance with an ivory look and good tactile surface texture and feel. However, SP10299 films that were biaxially stretched in a single step by blow-moulding did not have a glossy ivory look, but had a paper-like texture and feel. It was hence found that a different film product is obtained, which can be distinguished in terms of its appearance, texture and feel, if the same SP10299 material is biaxially stretched in two-steps (first in the MD direction and afterwards in the TD direction) than in a single step by blow moulding (simultaneously in the MD and TD directions). Generally a glossy ivory look and good tactile surface texture and feel are appreciated by the consumer for packaging. Since these properties were obtained in the SP10299 film that was biaxially stretched in two steps according to the invention, but were absent in the SP10299 film that was biaxially stretched in a single step by blow moulding, the two step biaxial stretching was found to improve the film's appearance, texture, feel and customer appreciation.

Table 6 compares the tensile strength properties of the SP10299 film that was biaxially stretched in a single step by blow moulding (simultaneously in the MD and TD directions) with the SP10299 film that was biaxially stretched in two steps (first in the MD direction and afterwards in the TD direction).

**Table 6**

| Sample | F-break [MPa] in MD direction | F-break [MPa] in TD direction |
|---|---|---|
| SP10299 blow moulding [1 step biaxial stretch] | 14.7 | 10.9 |
| SP10299 2 step biaxial stretch [monolayer] | 21.7 | 20.4 |

It was found that the SP10299 film that was biaxially stretched in two steps according to the invention exhibited higher F-break values than a film from the same material that was biaxially stretched in a single step by blow-moulding. This applies to both the F-break value in the MD direction as well as the F-break value in the TD direction. The difference in F-break values of the single step and two step biaxially stretched foils is larger in the TD direction (where the two-step biaxially stretched foil almost had a twice as high F-break value) than in the MD direction (where the two-step biaxially stretched foil was almost a half stronger).

Also the ratio between the F-break value in MD and TD directions of the two-step biaxially stretched film was more balanced (i.e. 21.7 MPa to 20.4 MPa as MD to TD) than for the single step biaxially stretched film by blow-moulding (i.e. 14.7 MPa to 10.9 MPa as MD to TD). This means that the two-step biaxially stretched film has similar tensile strength properties in both directions of its plane, while there is an imbalance in the film that was biaxially stretched in a single step by blow-moulding as it has better tensile strength in the MD than in the TD.

It was hence found that biaxially stretching a film from the same material in two-steps (first in the MD direction and afterwards in the TD direction) leads to better tensile strength properties in both MD and TD directions as well as to a more balanced MD to TD tensile strength ratio than performing biaxial stretching in a single step by blow moulding (simultaneously in the MD and TD directions).

### Example 8 - Industrial scale: Production and Stretching of biaxially stretched films

A film was cast on industrial scale of Material 1 of Example 1. A smooth film was obtained which could be stretched in MD direction at around 2-2.5 and in TD direction at around 4. A thickness of around 40 micrometer was obtained. The film had opaque appearance with an ivory look and feel. Material was more matte and less glossy than BOPP (biaxially oriented PP) and did not give the crispy noise like BO-PLA. The material had more tactile surface and better feel.

### Example 9 [comparative] - Industrial scale: Production and Stretching of films with added plasticizer (glycerol)

Compound SP10260 containing plasticizer (glycerol) was tested on a large scale extrusion film casting and stretching line. SP10260 contains 37 g starch, 23 g PBAT, 40 g PLA, 0 g water and 8.4 g glycerol. Also material SP10138 of example 3 was tested.

It was not possible to obtain a film suitable for stretching. The material was forming either water bubbles or were fuming (glycerol vapor) and were too weak to be stretch already in the MD direction. Also material SP10138 without glycerol but with water as plasticizer was found not suitable for stretching given a rough surface with bubbles and holes. Water vapour was formed after leaving the die.

## Claims

1. A method for producing renewable polylactic acid-starch pellets comprising compounding 1 - 30 wt% thermoplastic starch (TPS) with 30 - 80 % polylactic acid (PLA) and 1 - 20 wt% vinyl acetate - vinyl fatty acid copolymers, preferably vinyl acetate - vinyl laureate and/or vinyl acetate - vinyl crotonic acid copolymer, optionally 1 - 20 wt% TPS compounder and optionally 1 - 20 wt% vinyl acetate - ethylene copolymer, based on the total weight of TPS, optional TPS compounder, PLA and said copolymer(s), using a twin screw extruder, wherein glycerol, sorbitol, glycol and polyethylene glycol, if used, are present in a total amount less than 1 wt%, preferably less than 0.1 wt%, based on the total weight of the total weight of TPS, optional TPS compounder, PLA and said copolymer(s).

2. The method according to claim 1, wherein the water content during extrusion compounding is 0 - 4 wt% based on the amount of starch.

3. The method according to claim 1 or 2, wherein the starch is not provided in the form of flour.

4. A PLA/TPS pellet comprising 1 - 30 wt% thermoplastic starch (TPS) with 30 - 80 % polylactic acid (PLA) and 1 - 20 wt% vinyl acetate - vinyl fatty acid copolymers, preferably vinyl acetate - vinyl laureate and/or vinyl acetate - vinyl crotonic acid copolymer, optionally 1 - 20 wt% TPS compounder and optionally 1 - 20 wt% vinyl acetate - ethylene copolymer, based on the total weight of TPS, optional TPS compounder, PLA and said copolymer(s), wherein glycerol, sorbitol, glycol and polyethylene glycol, if present, are present in a total amount less than 1 wt%, preferably less than 0.1 wt%, based on the total weight of the total weight of TPS, optional TPS compounder, PLA and said copolymer(s).

5. The pellet according to claim 4, wherein the starch is not provided in the form of flour.

6. A method of producing a biaxially stretched cast foil or film, comprising extrusion casting of pellets according to claim 2 at a temperature less than 190 °C, to obtain cast sheets; and biaxially stretching the cast sheets, to obtain a biaxially stretched foil or film.

7. Biaxially stretched TPS/PLA foil or film comprising 1 - 30 wt% thermoplastic starch (TPS) with 30 - 80 % polylactic acid (PLA) and 1 - 20 wt% vinyl acetate - vinyl fatty acid copolymers, preferably vinyl acetate - vinyl laureate and/or vinyl acetate - vinyl crotonic acid copolymer, optionally 1 - 20 wt% TPS compounder and optionally 1 - 20 wt% vinyl acetate - ethylene copolymer, based on the total weight of TPS, optional TPS compounder, PLA and said copolymer(s), wherein glycerol, sorbitol, glycol and polyethylene glycol, if present, are present in a total amount less than 1 wt%, preferably less than 0.1 wt%, based on the total weight of TPS, optional TPS compounder, PLA and said copolymer(s).

8. Use of the foil or film according to claim 7 for packaging foods, consumer products or pharmaceutical products.

9. Packaging comprising a biaxially stretched TPS/PLA foil or film according to claim 7.

## Patentansprüche

1. Ein Verfahren zur Herstellung von erneuerbaren Polymilchsäure-Stärke-Pellets, umfassend ein Compoundieren von 1 - 30 Gew.-% thermoplastischer Stärke (TPS) mit 30 - 80 % Polymilchsäure (PLA) und 1 - 20 Gew.-% Vinylacetat-Vinylfettsäure-Copolymere, vorzugsweise Vinylacetat-Vinyllaureat- und/oder Vinylacetat-Vinylcrotonsäure-Copolymer, optional 1 - 20 Gew.-% TPS-Compounder und optional 1 - 20 Gew.-% Vinylacetat-Ethylen-Copolymer, bezogen auf das Gesamtgewicht von TPS, dem optionalem TPS-Compounder, PLA und dem Copolymer bzw. den Copolymeren, unter Verwendung eines Doppelschneckenextruders, wobei Glycerin, Sorbitol, Glycol und Polyethylenglycol, falls verwendet, in einer Gesamtmenge von weniger als 1 Gew.-%, vorzugsweise weniger als 0,1 Gew.-%, bezogen auf das Gesamtgewicht von TPS, dem optionalem TPS-Compounder, PLA und dem Copolymer bzw. den Copolymeren, vorliegen.

2. Das Verfahren nach Anspruch 1, wobei der Wassergehalt während des Extrusionscompoundierens 0 - 4 Gew.-%, bezogen auf die Menge an Stärke, beträgt.

3. Das Verfahren nach Anspruch 1 oder 2, wobei die Stärke nicht in der Form von Mehl bereitgestellt wird.

4. Ein PLA/TPS-Pellet, umfassend 1 - 30 Gew.-% thermoplastische Stärke (TPS) mit 30 - 80 % Polymilchsäure (PLA) und 1 - 20 Gew.-% Vinylacetat-Vinylfettsäure-Copolymere, vorzugsweise Vinylacetat-Vinyllaureat- und/oder Vinylacetat-Vinylcrotonsäure-Copolymer, optional 1 - 20 Gew.-% TPS-Compounder und optional 1 - 20 Gew.-% Vinylacetat-Ethylen-Copolymer, bezogen auf das Gesamtgewicht von TPS, dem optionalem TPS-Compounder, PLA und dem Copolymer bzw. den Copolymeren, wobei Glycerin, Sorbitol, Glycol und Polyethylenglycol, falls vorhanden, in einer Gesamtmenge von weniger als 1 Gew.-%, vorzugsweise weniger als 0,1 Gew.-%, bezogen auf das Gesamtgewicht von TPS, dem optionalem TPS-Compounder, PLA und dem Copolymer bzw. den Copolymeren, vorliegen.

5. Das Pellet nach Anspruch 4, wobei die Stärke nicht in der Form von Mehl bereitgestellt wird.

6. Ein Verfahren zur Herstellung einer biaxial gestreckten Gießfolie oder -film, umfassend ein Extrusionsgießen von Pellets nach Anspruch 4 bei einer Temperatur von weniger als 190 °C, um gegossene Platten zu erhalten; und ein biaxiales Strecken der gegossenen Platten, um eine biaxial gestreckte Folie oder einen biaxial gestreckten Film zu erhalten.

7. Eine biaxial gestreckte TPS/PLA-Folie oder ein biaxial gestreckter TPS/PLA-Film, umfassend 1 - 30 Gew.-% thermoplastische Stärke (TPS) mit 30 - 80 % Polymilchsäure (PLA) und 1 - 20 Gew.-% Vinylacetat-Vinylfettsäure-Copolymere, vorzugsweise Vinylacetat-Vinyllaureat- und/oder Vinylacetat-Vinylcrotonsäure-Copolymer, optional 1 - 20 Gew.-% TPS-Compounder und optional 1 - 20 Gew.-% Vinylacetat-Ethylen-Copolymer, bezogen auf das Gesamtgewicht von TPS, dem optionalem TPS-Compounder, PLA und dem Copolymer bzw. den Copolymeren, wobei Glycerin, Sorbitol, Glycol und Polyethylenglycol, falls vorhanden, in einer Gesamtmenge von weniger als 1 Gew.-%, vorzugsweise weniger als 0,1 Gew.-%, bezogen auf das Gesamtgewicht von TPS, dem optionalem TPS-Compounder, PLA und dem Copolymer bzw. den Copolymeren, vorliegen.

8. Verwendung der Folie oder des Films nach Anspruch 7 zum Verpacken von Lebensmitteln, Konsumgütern oder pharmazeutischen Produkten.

9. Verpackung, umfassend eine biaxial gestreckte TPS/PLA-Folie oder ein biaxial gestreckter TPS/PLA-Film nach Anspruch 7.

## Revendications

1. Procédé de production de pastilles de poly(acide lactique) - amidon renouvelables comprenant le mélange de 1 à 30 % en poids d'un amidon thermoplastique (TPS) avec 30 à 80 % de poly(acide lactique) (PLA) et 1 à 20 % en poids de copolymères acétate de vinyle-ester vinylique d'acide gras, de préférence d'un copolymère acétate de vinyle-laurate de vinyle et/ou acétate de vinyle-crotonate de vinyle, en option 1 à 20 % en poids de l'élément de mélange TPS et en option 1 à 20 % en poids d'un copolymère acétate de vinyle-éthylène, par rapport au poids total du TPS, de l'élément de mélange TPS en option, du PLA et dudit ou desdits copolymères, par utilisation d'une extrudeuse à double vis, dans lequel du glycérol, du sorbitol, du glycol et du polyéthylèneglycol, s'ils sont utilisés, sont présents en une quantité totale inférieure à 1 % en poids, de préférence inférieure à 0,1 % en poids, par rapport au poids total du TPS, de l'élément de mélange TPS en option, du PLA et dudit ou desdits copolymères.

2. Procédé selon la revendication 1, dans lequel la teneur en eau, pendant le mélange par extrusion, est de 0 à 4 % en poids par rapport à la quantité d'amidon.

3. Procédé selon la revendication 1 ou 2, dans lequel l'amidon n'est pas fourni sous forme de farine.

4. Pastille de PLA/TPS comprenant 1 à 30 % en poids d'un amidon thermoplastique (TPS) avec 30 à 80 % de poly(acide lactique) (PLA) et 1 à 20 % en poids de copolymères acétate de vinyle-ester vinylique d'acide gras, de préférence d'un copolymère acétate de vinyle-laurate de vinyle et/ou acétate de vinyle-crotonate de vinyle, en option 1 à 20 % en poids de l'élément de mélange TPS et en option 1 à 20 % en poids d'un copolymère acétate de vinyle-éthylène, par rapport au poids total du TPS, de l'élément de mélange TPS en option, du PLA et dudit ou desdits copolymères, dans lequel le glycérol, le sorbitol, le glycol et le polyéthylèneglycol, s'ils sont présents, sont présents en une quantité totale inférieure à 1 % en poids, de préférence inférieure à 0,1 % en poids, par rapport au poids total du TPS, de l'élément de mélange TPS en option, du PLA et dudit ou desdits copolymères.

5. Pastille selon la revendication 4, dans laquelle l'amidon n'est pas fourni sous forme de farine.

6. Procédé de production d'une feuille ou d'un film coulé bi-orienté(e), comprenant la coulée par extrusion de pastilles selon la revendication 2 à une température inférieure à 190 °C, pour obtenir des feuilles coulées ; et un étirement biaxial des feuilles coulées, pour obtenir la feuille ou le film bi-orienté(e).

7. Feuille ou film de TPS/PLA bi-orienté(e) comprenant 1 à 30 % en poids d'un amidon thermoplastique (TPS) avec 30 à 80 % de poly(acide lactique) (PLA) et 1 à 20 % en poids de copolymères acétate de vinyle-ester vinylique d'acide gras, de préférence d'un copolymère acétate de vinyle-laurate de vinyle et/ou acétate de vinyle-crotonate de vinyle, en option 1 à 20 % en poids de l'élément de mélange TPS et en option 1 à 20 % en poids d'un copolymère acétate de vinyle-éthylène, par rapport au poids total du TPS, de l'élément de mélange TPS en option, du PLA et dudit ou desdits copolymères, dans lequel le glycérol, le sorbitol, le glycol et le polyéthylèneglycol, s'ils sont présents, sont présents en une quantité totale inférieure à 1 % en poids, de préférence inférieure à 0,1 % en poids, par rapport au poids total du TPS, de l'élément de mélange TPS en option, du PLA et dudit ou desdits copolymères.

8. Utilisation de la feuille ou du film selon la revendication 7 pour l'emballage de produits alimentaires, de produits de consommation ou de produits pharmaceutiques.

9. Emballage comprenant une feuille ou un film de TPS/PLA bi-orienté(e) selon la revendication 7.
